# FASCICULE DE BREVET EUROPEEN

(11) **EP 1 582 681 B1**
(45) Date de publication et mention de la délivrance du brevet: **29.04.2009**
(21) Numéro de dépôt: 05356055.3
(22) Date de dépôt: 30.03.2005
(51) Int. Cl.: E05F 15/16, E05F 5/00, F16D 55/22, F16D 65/14, H02K 7/102

(54) **Mécanisme de manoeuvre d'une porte, utilisation d'un frein dans un tel mécanisme et procédé de régulation d'un couple moteur dans un tel mécanisme**
Betätigungsvorrichtung einer Tür, Benutzung einer Bremse in einer solchen Vorrichtung und Verfahren zur Einstellung eines Antriebsmoments in einer solchen Vorrichtung
Operating mechanism of a door, use of a brake in such a mechanism and method for adjusting an engine torque in such a mechanism

(30) Priorité: 31.03.2004 FR 0403383
(43) Date de publication de la demande: 05.10.2005
(73) Titulaire: Somfy SAS, 74300 Cluses (FR)
(72) Inventeur: Bruno, Serge, 74460 Marnaz (FR); Clerget, Sergyl, 74290 Bluffy (FR); Depaix, Daniel, 74300 Cluses (FR)
(74) Mandataire: Myon, Gérard Jean-Pierre

(56) Documents cités:
- EP-A- 0 808 986
- EP-A- 1 324 466
- EP-A- 1 326 000
- DE-A- 3 301 446
- FR-A- 2 837 865
- US-A1- 2003 201 077

## Description

La présente invention a trait à un mécanisme de manoeuvre d'une porte dont le mouvement est partiellement vertical. L'invention a également trait à l'utilisation d'un frein dans un tel mécanisme ainsi qu'à un procédé de régulation du couple exercé par un moteur dans un tel mécanisme.

Au sens de la présente invention, on entend par porte les portes, portails, volets, grilles et matériels équivalents permettant de fermer sélectivement une ouverture d'un bâtiment.

Les portes à mouvement partiellement vertical sont parfois dénommées « portes à rangement sensiblement horizontal » et sont classiquement utilisées pour obturer sélectivement une ouverture, par exemple d'accès à un garage. Ces portes sont globalement verticales en configuration fermées et globalement horizontales, en général disposées à proximité du plafond, en configuration ouverte. Leur mouvement d'ouverture/fermeture a donc à la fois une composante horizontale et une composante verticale. Pour la manoeuvre des portes de ce type, il est connu d'utiliser un groupe moto-réducteur comprenant un moteur électrique et un réducteur.

Pour certaines portes, et notamment les portes de garage, il est par ailleurs connu de WO-A-03/083245 d'utiliser des moyens dits « de compensation », tels que des ressorts, visant à compenser au moins partiellement le poids d'une porte. De tels moyens de compensation visent à réduire la force motrice nécessaire à la manoeuvre de la porte, notamment lors de la remontée de celle-ci. Les moyens de compensation sont en général conçus de façon à ce que les variations de l'effet combiné de l'effort de compensation et du poids de la porte soient aussi faibles que possible. Toutefois, aussi perfectionnés soient-ils, ces moyens ne permettent pas d'atteindre un résultat parfait et, en pratique, la porte est généralement sur-compensée, auquel cas elle a tendance à remonter malgré son poids, ou sous-compensée, auquel cas elle a tendance à descendre sous l'effet de son poids. Le caractère sur-compensé ou sous-compensé de la porte peut varier en fonction de la position de la porte au cours de son déplacement, dans la mesure où le couple résultant de son poids dépend de sa position par rapport au linteau de l'ouverture. Par exemple, sur certaines portes basculantes de type non débordant, les moyens de compensation assurent le plus souvent un équilibre du poids de la porte lorsque celle-ci est en position médiane mais, à proximité de sa position fermée ou de sa position complètement ouverte, la porte peut être entraînante puis, au delà du point médian, devenir freinante. Sur d'autres types de portes, par exemple les portes sectionnelles, le caractère sur-compensé ou sous-compensé de la porte peut subir plusieurs alternances. En outre, ces variations peuvent être fonction de l'usure de la porte et ou de ses moyens de guidage.

Le caractère sur-compensé ou sous-compensé de la porte peut provoquer des désordres lors de ses déplacements, notamment du fait que sa vitesse varie en fonction de la nature de la compensation et ce, d'autant plus que l'inertie de la porte et le passage d'une situation de sur-compensation à une situation de sous-compensation ou vice-versa amplifie les accélérations. Le mouvement des portes est donc parfois saccadé, avec des effets de rebonds. Ceci induit un fonctionnement du moteur électrique d'entraînement à vitesse irrégulière et, notamment, le fait qu'il fonctionne parfois en générateur, ce qui peut limiter sensiblement sa durée de vie. En outre, lorsqu'il fonctionne en générateur, un moteur peut émettre un son de fréquence désagréable pour une personne se trouvant à proximité.

Les inconvénients mentionnés ci-dessus sont source de désagréments visuels et sonores pour un utilisateur et induisent des contraintes supplémentaires sur la porte et son système de manoeuvre. En particulier, le moteur et son système d'alimentation électrique risquent d'être détériorés du fait des piques de courant résultant du fonctionnement du moteur en générateur.

Pour résoudre ce problème, il est connu de rendre irréversible la transmission du mouvement entre la porte et le moteur, par exemple au moyen d'un réducteur comprenant une roue et une vis sans fin. Un tel réducteur irréversible est d'un rendement relativement médiocre, ce qui impose d'utiliser un moteur de puissance plus élevé que réellement nécessaire, plus consommateur d'énergie, plus encombrant et plus coûteux à l'achat et à l'usage. En outre, un tel réducteur irréversible doit être dimensionné pour absorber des à-coups et l'usure due aux frottements dans la chaîne cinématique.

C'est à ces inconvénients qu'entend plus particulièrement remédier l'invention en proposant un mécanisme de manoeuvre équipé, entre autres, de moyens de compensation du poids d'une porte grâce auxquels un déplacement non saccadé de la porte peut être obtenu, sans utilisation d'un réducteur irréversible et au moyen d'un moteur dont le dimensionnement peut être optimisé.

Dans cet esprit, l'invention concerne un mécanisme de manoeuvre d'une porte à mouvement au moins partiellement vertical, ce mécanisme comprenant :
- un moteur électrique ;
- un organe apte à être entraîné par le moteur et cinématiquement lié à la porte ; et
- des moyens de compensation au moins partielle du couple exercé par le poids de la porte sur cet organe,
caractérisé en ce qu'il comprend un frein intercalé entre ce moteur et cet organe, ce frein étant apte à exercer à l'encontre du moteur un effort freinant au moins dans les phases de déplacement de la porte où l'effet conjugué du poids de la porte et de l'effort exercé par les moyens de compensation tend à déplacer cet organe dans le même sens que le moteur.

Grâce à l'invention, le frein permet de réguler le couple que doit exercer le moteur électrique pour entraîner la porte, la régulation ayant lieu en fonction du couple que doit effectivement vaincre le moteur, ce couple à vaincre étant lui-même sensiblement égal à l'effet conjugué, c'est-à-dire à la résultante, du couple exercé par les moyens de compensation et du couple exercé par le poids de la porte. L'invention procède donc d'une approche originale qui consiste à freiner plus ou moins le mouvement de la porte en fonction de l'effet conjugué des moyens de compensation et du poids de la porte. Plus précisément, le freinage a lieu au moins lorsque la porte est entraînante par rapport au sens du mouvement imprimé par le moteur. L'effort freinant est avantageusement variable en fonction de l'intensité et du sens de l'effet conjugué du poids de la porte et de l'effort de compensation exercé par les moyens précités.

Selon des aspects avantageux mais non obligatoires, un mécanisme de manoeuvre peut incorporer une ou plusieurs des caractéristiques suivantes :
- L'effort freinant exercé par le frein est maximal, lorsque l'effet conjugué précité tend à déplacer l'organe précisé dans le même sens que le moteur.
- L'effort freinant exercé par le frein est décroissant en fonction de l'effet conjugué précité lorsque cet effet tend à déplacer l'organe en sens inverse du moteur. De préférence, l'effort freinant est alors sensiblement inversement proportionnel à cet effet conjugué.
- La valeur maximale du couple exercé par le frein est sensiblement égale au couple nominal du moteur. Ainsi, le couple exercé par le moteur varie peu et la vitesse de déplacement de la porte est quasi-constante sur sa course.
- Le moteur est de type à courant continu, avec une alimentation régulée en tension. Grâce à cet aspect de l'invention, le couple exercé par le frein peut être réduit, ce qui permet d'optimiser les dimensions du moteur tout en conservant, sur la zone de compensation négative, une variation faible du couple moteur. Ceci permet de maintenir un déplacement régulier de la porte.
- Le frein est de type à friction, avec au moins une garniture mobile en fonction de la valeur et/ou du sens de l'effet conjugué précité.
- Le frein est commandé pour exercer l'effort freinant en fonction du signal de sortie d'un capteur de détection du sens et/ou de la valeur de l'effet conjugué précité.

L'invention a également trait a l'utilisation d'un frein dans un mécanisme tel que décrit ci-dessus et, plus spécifiquement, à l'utilisation d'un frein apte à exercer un effort, variable pour réguler le couple que doit exercer un moteur électrique d'entraînement d'un organe solidaire d'une porte à mouvement partiellement vertical soumise à l'action de moyens de compensation au moins partielle de son poids.

L'invention concerne également un procédé de régulation du couple à exercer par un moteur électrique dans un mécanisme tel que précédemment décrit, ce procédé comprenant au moins une étape dans laquelle on exerce, à l'encontre du moteur, un effort freinant en fonction de l'intensité et du sens de l'effet conjugué du poids de la porte et de l'effort de compensation de ce poids.

On exerce cet effort au moins lorsque l'effet conjugué précité tend à déplacer l'organe précité dans le même sens que le moteur.

Grâce au procédé de l'invention, le frein compense plus ou moins l'effet conjugué ou couple résultant, ce qui permet une optimisation du couple à exercer par le moteur électrique, l'amplitude de variation de ce couple pouvant être relativement mineure en comparaison de l'amplitude du couple à exercer dans les matériels connus.

Le couple de blocage du frein peut être exercé avec une valeur maximale, lorsque l'effet conjugué précité est de même sens que le couple exercé par le moteur, et une valeur décroissante, de préférence sensiblement inversement proportionnelle à cet effet conjugué, lorsque cet effet tend à déplacer cet organe en sens inverse du moteur.

L'invention sera mieux comprise et d'autres avantages de celle-ci apparaîtront plus clairement à la lumière de la description qui va suivre de deux modes de réalisation d'un mécanisme conforme à son principe et d'un procédé de régulation de couple mis en oeuvre grâce à ce mécanisme, donnée uniquement à titre d'exemple et fait en référence aux dessins annexés dans lesquels :
- la figure 1 est une vue de côté d'une porte de garage équipé d'un mécanisme conforme à l'invention ;
- la figure 2 est une vue de dessus de la porte de la figure 1 ;
- la figure 3 est une section axiale à plus grande échelle selon la ligne III-III à la figure 2, dans une première configuration ;
- la figure 4 est une vue à plus grande échelle du détail IV à la figure 3, alors que le mécanisme est dans une seconde configuration ;
- les figures 5A et 5B sont des représentations schématiques en développé de certains éléments cinématiques du mécanisme des figures 1 à 4, respectivement dans les configurations des figures 4 et 3 ;
- la figure 6 est une courbe représentative de certains efforts produits dans le mécanisme des figures 1 à 5 ;
- la figure 7 est une représentation schématique permettant d'apprécier l'évolution de certaines vitesses de déplacement en fonction des couples appliqués ;
- la figure 8 est une coupe analogue à la figure 3 pour un mécanisme conforme à un second mode de réalisation de l'invention et
- la figure 9 est une coupe dans le plan XI-XI à la figure 8.

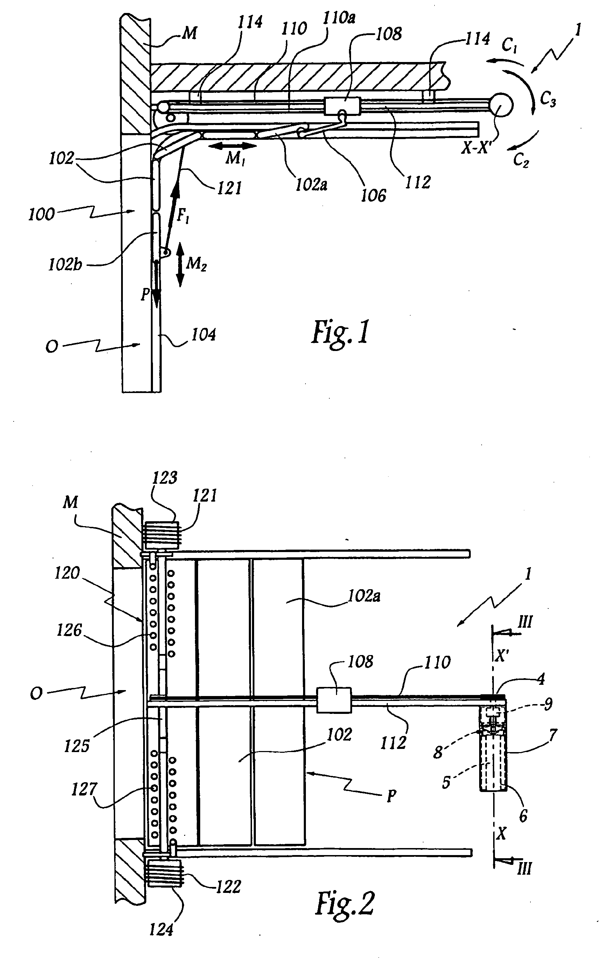

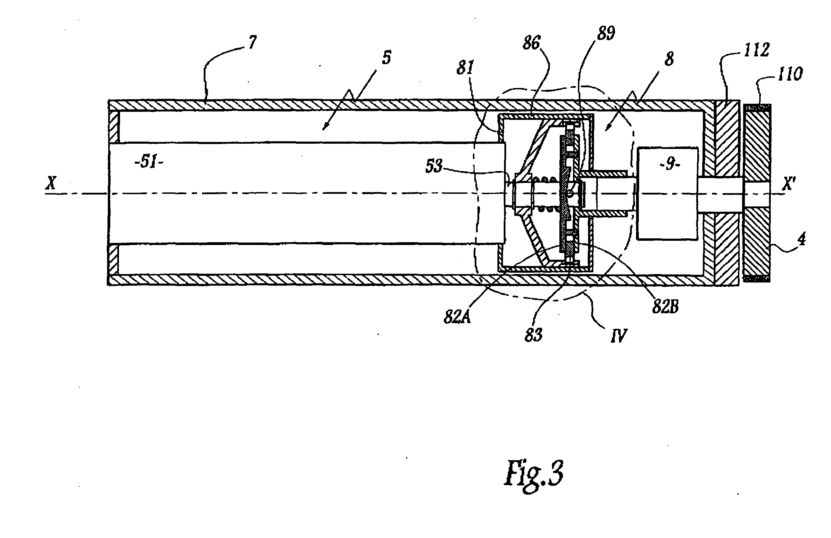

L'installation représentée partiellement aux figures 1 à 5 comprend un mécanisme 1 permettant de déplacer une porte 100 de garage entre une position fermée, où cette porte est verticale et obture une ouverture ○, et une position ouverte, où cette porte est globalement horizontale. La porte 100 est sectionnelle et constituée de plusieurs panneaux 102 articulés entre eux et pourvus de galets aptes à rouler dans des guides 104 prévus de part et d'autre de l'ouverture ○. Le panneau supérieur 102a de la porte 102 est relié par une crosse 106 à un chariot 108 déplacé perpendiculairement au mur M dans lequel est ménagé l'ouverture ○ par une courroie sans fin 110 entraînée par le mécanisme 1. Le chariot est solidaire du brin inférieur de la courroie 110 et coulisse le long d'une barre 112 fixée parallèlement au plafond du garage par deux pattes 114.

La porte 100 est prévue pour se déplacer suivant un mouvement ayant une composante horizontale M₁, globalement parallèle à la direction du plafond du garage, et avec une composante verticale M₂, globalement parallèle au mur dans lequel est ménagée l'ouverture ○.

Pour entraîner la courroie 110, une couronne 4 est prévue mobile en rotation autour d'un axe X-X' sensiblement horizontal, la courroie 110 entourant la couronne 4 sur 180° environ et étant solidaire en rotation avec elle par adhérence ou grâce à des crans.

Pour l'entraînement de la couronne 4 autour de l'axe X-X', il est prévu un moteur électrique 5 monté à une extrémité de la barre 112 et logé à l'intérieur d'un tube 7.

Un dispositif 120 de compensation du poids de la porte 100 est prévu et comprend deux câbles 121 et 122 fixés sur le panneau inférieur 102b de la porte 100 et enroulés chacun sur un tambour 123, respectivement 124. Les tambours sont reliés par une barre de synchronisation 125 entourée par deux ressorts de compensation 126 et 127 dont une extrémité est fixée sur la barre et dont l'autre extrémité est fixée à la structure. Ainsi, en fonction du déplacement de la porte 100, les ressorts 126 et 127 sont plus ou moins bandés et contribuent à exercer sur la porte 100 et à travers les câbles 121 et 122 un effort F₁ qui s'oppose au poids P de la porte 100.

L'arbre de sortie 53 du moteur 5 attaque un frein à friction 8 en sortie duquel est monté un réducteur réversible 9 qui attaque lui-même la couronne 4.

Ainsi, le mouvement de l'arbre de sortie du moteur 5 peut être transmis à la couronne 4 à travers le frein 8 et le réducteur 9.

Le frein 8 est conforme à l'enseignement technique de FR-A-2 834 391 et comprend une boîtier 81 fixé sur le boîtier 51 du moteur 5 et qui renferme deux disques 82A et 82B entre lesquels est disposé une couronne annulaire 83 en prise par des saillies radiales externes 84 avec des saillies radiales internes 85 ménagées dans un support 86 fixé à l'intérieur du boîtier 81 et monté libre en rotation et fixe en translation sur l'arbre 53. Un ressort 87 est interposé entre le disque 81 et un circlips 88 d'immobilisation du support 86 sur l'arbre 53. Il exerce un effort F₈₇ ayant tendance à plaquer le disque 82A et la couronne 83 sur le disque 82B, ce qui induit un couple C₈ de freinage en rotation du disque 82B et du manchon 82C monobloc avec ce disque et dans lequel vient en prise l'arbre d'entrée 91 du réducteur 9. Le couple C₈ dépend de l'effort F₈₇ et du coefficient de frottement entre la couronne 83 et les disques 82A et 82B. Par défaut, l'effort F₈₇ exerce un couple de freinage maximum C₈ₘₐₓ qui bloque la couronne 83 entre les disques 82A et 82B et immobilise ainsi le disque 82B par rapport au boîtier 81 qui est fixe. Ainsi, par défaut, le frein 8 s'oppose à la transmission d'effort entre le moteur 5 et le réducteur 9 et entre le réducteur 9 et le moteur 5.

Une goupille 89 est montée selon un diamètre de l'arbre 53 à proximité de son extrémité sur laquelle le disque 82B est immobilisé en translation par un circlips 82D.

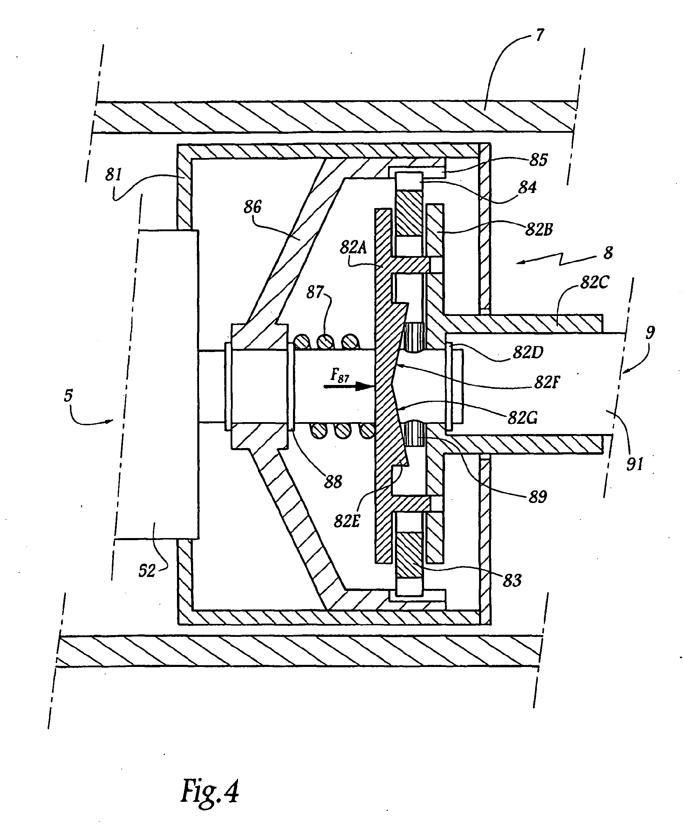

Le disque 82A est pourvu d'une surépaisseur 82E formant une double rampe 82F, 82G contre laquelle la goupille 89 vient en appui, comme représenté à la figure 2, lorsque le moteur 5 entraîne l'arbre 53. Ceci a pour effet de décaler axialement le disque 82A en direction du circlips 88, à l'encontre de l'effort de freinage F₈₇, en permettant ainsi un mouvement de glissement du disque 82A par rapport à la couronne 83 et de la couronne 83 par rapport au disque 82B du fait de la diminution de la valeur du couple C₈. Ainsi, dans la configuration de la figure 4, le frein ne bloque plus la transmission de mouvement du moteur 5 vers le réducteur 9.

Le couple C₅ exercé par le moteur pour entraîner les éléments 9, 10 et 4 doit vaincre le couple de freinage C₈ exercé par le frein 8.

Le frein 8, qui est intercalé entre le moteur 5 et le réducteur 9, permet de par sa construction d'exercer un couple C₈ de freinage variable en fonction du sens et de l'intensité du couple C₃ subi par la couronne 4 du fait du poids P de la porte 100, d'une part, et de l'effort F₁ de compensation de ce poids exercé par le ressort 7, d'autre part.

L'effort F₁ est transmis par la porte 100 et les éléments 106, 108 et 110 à la couronne 4 sur laquelle il s'exerce sous la forme d'un couple C₁ dirigé dans le sens anti-horaire à la figure 1. Le poids P est également transmis à la couronne 4 sur laquelle il s'exerce sous la forme d'un couple C₂ dirigé dans le sens horaire, comme représenté à la figure 1. L'effet conjugué du poids et de l'effort de compensation se traduit donc, au niveau de la couronne 4 comme un couple résultant C₃ qui peut être horaire ou anti-horaire selon les valeurs relatives des couples C₁ et C₂.

A la remontée de la porte, lorsque le couple C₁ a une intensité inférieure au couple C₂, on peut considérer que le couple C₃ exercé sur la couronne 4 par la courroie 110 est positif, c'est-à-dire que la compensation due aux ressorts 126 et 127 n'est pas suffisante pour équilibrer le poids de la porte 100. La porte est alors freinante pour le déplacement et l'on peut parler de sous-compensation ou de compensation négative. Au contraire, lorsque le couple C₁ a une intensité supérieure au couple C₂, on peut considérer que la charge, c'est-à-dire la porte 100 et les éléments qui lui sont liés, est entraînante. En d'autres termes, le couple de compensation C₁ fait plus que compenser le poids de la porte 100. On peut parler de sur-compensation ou de compensation positive. Dans ce cas, on peut considérer que le couple C₃ est négatif.

Lors de l'abaissement de la porte, la porte est freinante lorsque le couple C₁ a une valeur supérieure au couple C₂ et entraînante dans le cas contraire. Le couple C₃ prend alors respectivement des valeurs positive et négative.

En pratique, en fonction des variations de position et de sens de déplacement de la porte 100 par rapport à l'ouverture ○, le couple C₃ peut varier entre une valeur positive maximum C₃ₘₐₓ et une valeur négative minimale C₃ₘᵢₙ. On note Z₁ la plage de variation du couple C₃ entre les valeurs C₃ₘᵢₙ et C₃ₘₐₓ. On note Z₂ la plage de variation positive du couple C₃ et Z₃ la plage de variation négative de ce couple.

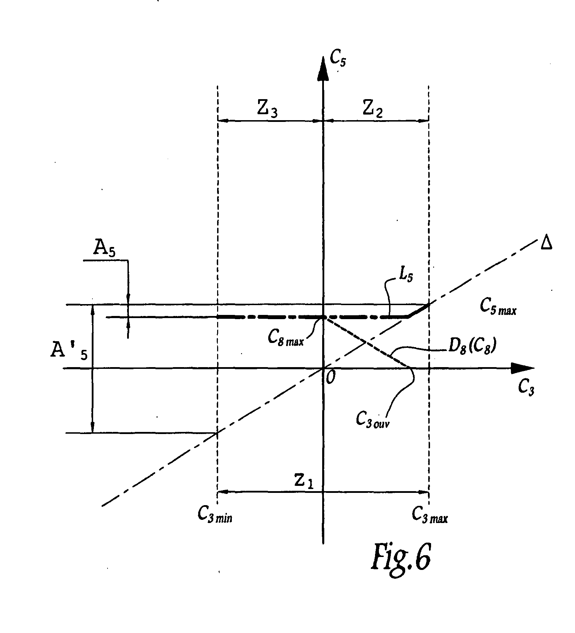

En l'absence d'un frein tel que le frein 8, le couple C₅ que devrait exercer le moteur 5 pour entraîner la couronne 4 serait, en fonction du couple C₃, globalement tel que représenté par la droite Δ à la figure 6, c'est-à-dire un couple équilibrant sensiblement le couple C₃.

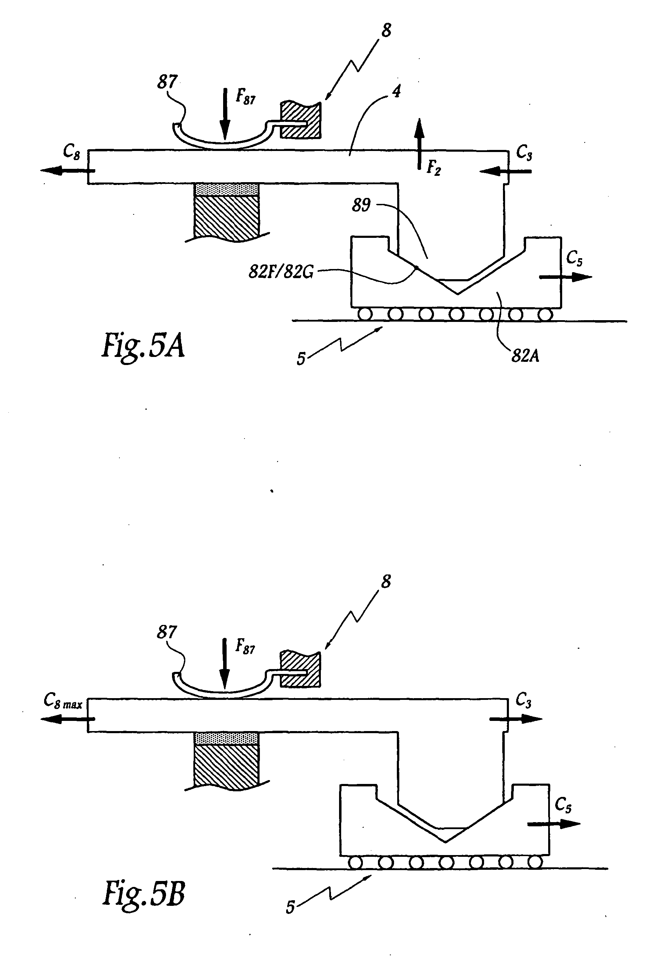

Comme il ressort plus particulièrement à la figure 5A, lorsque la charge est freinante, c'est-à-dire lorsqu'on se trouve dans la zone Z₂ à la figure 6, le couple C₅ exercé par le moteur peut être considéré comme ayant tendance a déplacer le disque 82A vers la droite à la figure 5A, alors que le couple résultant C₃ a tendance a déplacer la charge, c'est-à-dire, la porte 100 et, entre autres, la couronne 4, vers la gauche sur cette figure. Il en résulte une transmission d'effort au niveau des rampes 82F et 82G et de la goupille 89 qui induit un déplacement F₂ représenté dirigé vers le haut à la figure 5A, ce déplacement ayant tendance à décoller les garnitures du frein 8, à l'encontre de l'effort élastique F₈₇. Dans ce cas, le couple C₈ diminue lorsque la valeur du couple C₃ augmente.

Au contraire, et comme il ressort de la figure 5B, si la charge est entraînante, le couple C₃ peut être considéré comme dirigé vers la droite sur cette figure et rien ne s'oppose au plein effet de l'effort F₈₇, de telle sorte que le frein 8 freine complètement la charge et exerce un effort maximum et sensiblement constant C₈ₘₐₓ qui s'oppose à une transmission d'effort, notamment de la couronne 4 en direction du moteur 5. Le couple C₅ que doit exercer le moteur 5 pour entraîner alors la porte 100 doit vaincre l'effort de freinage, c'est-à-dire C₈ₘₐₓ.

Dans la configuration de la figure 5A, le couple d'ouverture du frein 8 est représenté par le segment de droite D₈ à la figure 5 et il s'ajoute au couple représenté par la droite Δ dans la zone Z₂. Le couple résistant C₈ généré par le frein est décroissant en fonction de la valeur de C₃ de sa valeur nominale et maximale C₈ₘₐₓ, correspondant au cas où la charge est équilibrée, c'est-à-dire lorsque la compensation n'est ni positive ni négative, vers une valeur nulle correspondant à une valeur C₃ₒᵤᵥ du couple C₃ induisant l'ouverture du frein 8. En fait, dans cette plage de fonctionnement, le couple C₈ est sensiblement inversement proportionnel au couple C₃.

Dans la zone Z₂, l'effort C₅ que doit exercer le moteur 5 pour déplacer la couronne 4 peut donc être considéré comme représenté par la courbe en traits mixtes et gras L₅ qui est la somme des droites Δ et D₈.

Dans la Zone Z₃, le couple que doit vaincre le moteur pour entraîner la couronne 4 est, comme expliqué en référence à la figure 5B, égal au couple nominal C₈ₘₐₓ dû à l'effort F₈₇. C'est pourquoi, dans cette plage, la courbe L₅ est une droite horizontale, le couple C₅ à exercer par le moteur étant sensiblement constant et égal à C₈ₘₐₓ.

Il ressort de ce qui précède que, lorsque le moteur est alimenté, le frein 8 agit plus en tant que régulateur de vitesse que réellement en tant que frein pour bloquer la charge.

Au vu de ce qui précède, l'amplitude A₅ de variation du couple C₅ du moteur 5 est comprise entre la valeur sensiblement constante et égale à C₈ₘₐₓ du couple C₅, dans la zone Z₃ et sur une partie de la zone Z₂, et la valeur maximale C₅ₘₐₓ de ce couple pour une charge entraînante maximale C₃ₘₐₓ. Cette amplitude A₅ est largement inférieure à l'amplitude correspondante A'₅ qui serait à prendre en compte pour un mécanisme dépourvu de frein.

L'invention permet donc de diminuer très sensiblement l'amplitude des variations du couple C₅ que doit exercer le moteur 5. Ce couple a toujours une valeur positive, ce qui exclut, de fait, le fonctionnement du moteur en générateur, un tel fonctionnement risquant de détériorer le moteur.

On peut distinguer le couple de friction du frein C₈ₘₐₓ, qui est celui correspondant à un patinage du frein lorsqu'il n'y a pas de charge, et le couple d'ouverture du frein C₃ₒᵤᵥ qui est celui exercé sur le frein à l'instant où les garnitures du frein se séparent. Le couple de friction du frein correspond à la valeur du couple C₅ que doit exercer le moteur dans la zone Z₃.

De façon avantageuse, le couple de friction C₈ₘₐₓ du frein 8 est choisi avec une valeur sensiblement égale au couple nominal du moteur, ce qui permet de minimiser encore les variations du couple et, en conséquence, les variations de la vitesse de la porte au cours de son déplacement.

Grâce à l'invention, la vitesse de déplacement de la porte est plus régulière que dans les dispositifs connus et les à-coups et rebonds sont évités. Le moteur ne travaillant plus en générateur, les risques électriques sont diminués. En particulier, si le moteur est un moteur asynchrone, il n'y a pas de risque de décrochage du moteur.

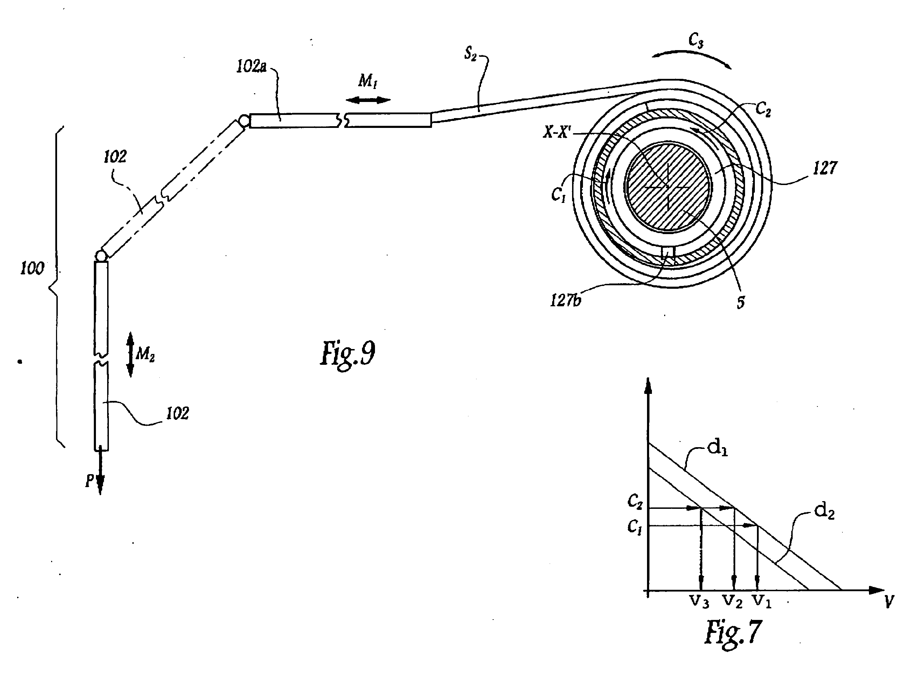

Si le moteur est un moteur à courant continu, une alimentation plus simple et moins coûteuse peut être utilisée, en particulier une alimentation dite « irréversible » et/ou régulée en tension. Une alimentation dite « irréversible » est plus fiable et plus économique qu'une alimentation dite « réversible » qui doit pouvoir supporter des courants inverses en provenance du moteur. En outre, une alimentation régulée en tension permet de fixer la relation entre la vitesse de rotation du moteur et le couple exercé, par exemple dans une relation de proportionnalité inverse comme représenté à la figure 7. Une telle alimentation permet de réduire le couple de friction du frein et d'optimiser les dimensions du moteur tout en conservant, sur la zone de compensation négative Z₂, une variation faible du couple moteur. On obtient donc un déplacement régulier de la porte, avec un moteur plus petit et de plus faible puissance que dans les dispositifs connus. L'installation est en outre fiabilisée.

Comme il ressort plus particulièrement de la figure 7, une alimentation régulée en tension d'un moteur à courant continu permet de conserver une relation prédéterminée entre des valeurs de vitesse V₁ et V₂ de déplacement de la porte et des valeurs de couple C₁ et C₂. En effet, les paires de valeur V₁, C₁ et V₂ ,C₂ correspondantes doivent se trouver sur une droite d₁ prédéterminée à la figure 6. En cas de passage du couple d'une valeur C₁ à une valeur C₂, la vitesse passe d'une valeur V₁ à une valeur V₂ sans risque de voir la vitesse décroître jusqu'à une valeur V₃ correspondant au cas où le point correspondant serait situé sur une droite d₂ différente à la figure 6, ce qui pourrait être le cas pour une alimentation non régulée. Ainsi, les variations de vitesse, de V₁ à V₂, sont plus faibles dans le cas d'une alimentation régulée que dans le cas d'une alimentation non régulée de V₁ à V₃.

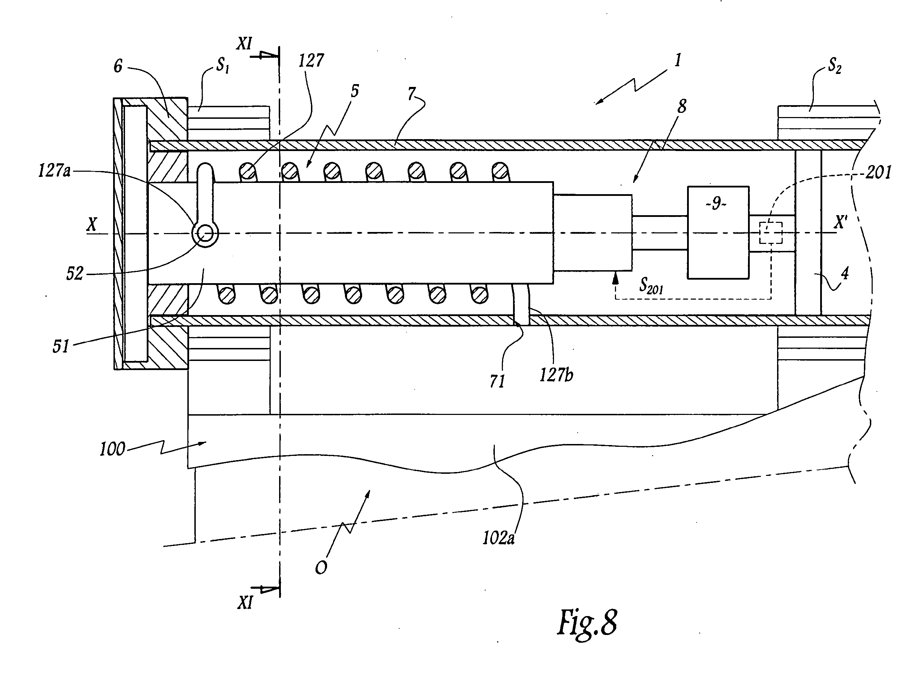

Dans le second mode de réalisation de l'invention représenté aux figures 8 et 9, les éléments analogues à ceux du premier mode de réalisation portent des références identiques. Ce mécanisme 1 diffère du précédent en ce que le moteur 5 est monté sur une console 6 fixée à la maçonnerie du bâtiment, ce moteur étant logé à l'intérieur d'un tube 7 qu'il entraîne en rotation autour de l'axe X-X' au moyen de la couronne 4. Des sangles S₁ et S₂ sont plus ou moins enroulées autour du tube 7, en fonction de sa position en rotation autour de l'axe X-X', ces sangles étant fixées sur le panneau supérieur 102a de la porte 100. Un ressort de compensation 127 est monté à l'intérieur du tube 7, autour du boîtier 51 du moteur 5. Une première extrémité 127a du ressort 127 entoure un ergot 52 prévu sur le boîtier 51, alors que sa seconde extrémité 127b est fixée au tube 7 par tout moyen approprié, notamment par introduction dans un orifice 71 ménagé dans ce tube. Ainsi, en fonction de la rotation du tube 7 et des déplacements de la porte 100, le ressort 127 exerce, sur ce tube et sur la couronne 4 qui lui est rigidement associée, un couple C₁ qui s'oppose au couple C₂ exercé sur ce même tube par les sangles S₁ et S₂ du fait du poids P de la porte 100. On note C₃ la somme des couples C₁ et C₂.

Comme précédemment, un frein 8 est installé entre le moteur 5 et un réducteur 9 qui attaque la couronne 4, ce frein ayant la même fonction que celui du premier mode de réalisation et exerçant un effort de freinage variable en fonction de l'intensité et du sens du couple C₃.

Le frein 8 peut être du même type que celui du premier mode de réalisation ou d'un type différent.

En particulier, comme représenté en traits mixtes à la figure 8, un capteur 201 peut être intégré dans le mécanisme 1 à proximité de la couronne 4 pour déterminer le sens du couple C₃ et permettre de savoir si la porte 100 est freinante ou entraînante. Le signal électrique de sortie S₂₀₁ du capteur 201 est alors fourni en entrée au frein 8, ce qui permet de réguler électriquement l'effort freinant exercé par ce frein 8 qui est alors avantageusement de type électro-magnétique.

L'invention a été représentée avec une porte 100 sectionnelle mais s'applique à tout type de porte, notamment les portes de garage à cadre rigide avec ou sans débordement.

L'invention a été représentée avec un frein du type connu de FR A 2 834 391. Elle peut cependant être mise en oeuvre avec des freins tels que connus de DE-C-909 274, de DE-C-834 714, de FR-A-2 720 806, de IT-BO-92 U 000009 ou de EP-A-1 326 000. D'autres structures de frein peuvent être envisagées dans le cadre de la présente invention. En particulier, l'effort freinant exercé par le frein n'est pas nécessairement un couple.

Les caractéristiques techniques des différents modes de réalisations mentionnés peuvent être combinées entre elles dans le cadre de l'invention défini par les revendications ci-annexées.

## Revendications

1. Mécanisme de manoeuvre d'une porte à mouvement partiellement vertical, ce mécanisme comprenant :
- un moteur électrique (5) ;
- un organe (4) apte à être entraîné par le moteur et cinématiquement lié à la porte (100), et
- des moyens (126, 127) de compensation (C₁) au moins partielle du couple (C₂) exercé par le poids (P) de la porte sur ledit organe,
**caractérisé en ce qu'**il comprend un frein (8) intercalé entre ledit moteur (5) et ledit organe (4) et apte à exercer à l'encontre dudit moteur un effort freinant (C₈) au moins dans les phases de déplacement de la porte (100) où l'effet conjugué (C₃) du poids (P) de la porte et de l'effort (F₁, C₁) exercé par les moyens de compensation (126, 127) tend à déplacer ledit organe (4) dans le même sens que ledit moteur (5).

2. Mécanisme selon la revendication 1, **caractérisé en ce que** ledit effort freinant (C₈) est maximal (C₈ₘₐₓ), lorsque l'effet conjugué (C₃) du poids (P) de la porte (100) et de l'effort (F₁, C₁) exercé par les moyens de compensation (126, 127) tend à déplacer ledit organe (4) dans le même sens que ledit moteur (5).

3. Mécanisme selon l'une des revendications précédentes, **caractérisé en ce que** ledit effort freinant (C₈) est décroissant en fonction de l'effet conjugué (C₃) du poids (P) de la porte (100) et de l'effort (F₁, C₁) exercé par les moyens de compensation (126, 127) lorsque ledit effet conjugué (C₃) tend à déplacer ledit organe en sens inverse dudit moteur (5).

4. Mécanisme selon la revendication 3, **caractérisé en ce que** ledit effort freinant (C₈) est sensiblement inversement proportionnel à l'effet conjugué (C₃) du poids (P) de la porte (100) et de l'effort (F₁, C₁) exercé par les moyens de compensation (126, 127) lorsque ledit effet conjugué (C₃) tend à déplacer ledit organe en sens inverse dudit moteur (5).

5. Mécanisme selon l'une des revendications précédentes, **caractérisé en ce que** la valeur maximale (C₈ₘₐₓ) du couple de freinage exercé par le frein (8) est sensiblement égale au couple nominal du moteur (5).

6. Mécanisme selon l'une des revendications précédentes, **caractérisé en ce que** le moteur (5) est de type à courant continu avec une alimentation régulée en tension.

7. Mécanisme selon l'une des revendications précédentes, **caractérisé en ce que** le frein (8) est de type à friction avec au moins une garniture (82A,82B,83) mobile en fonction de la valeur et du sens de l'effet conjugué (C₃) du poids (P) de la porte (100) et de l'effort (F₁, C₁) exercé par les moyens de compensation (126, 127).

8. Mécanisme selon l'une des revendications précédentes, **caractérisé en ce qu'**il comprend un capteur (201) de détection du sens et/ou de la valeur de l'effet conjugué (C₃) du poids (P) de la porte et de l'effort (F₁, C₁) exercé par les moyens de compensation (126, 127), ledit frein étant commandé pour exercer ledit effort freinant (C₈) en fonction du signal de sortie (S₂₀₁) dudit capteur.

9. Utilisation d'un frein (8) apte à exercer un effort variable (C₈) pour réguler le couple (C₅) que doit exercer un moteur électrique (5) d'entraînement d'un organe (4) solidaire d'une porte (100) à mouvement partiellement vertical soumise à l'action de moyens (126, 127) de compensation au moins partielle de son poids.

10. Procédé de régulation du couple à exercer par un moteur électrique (5) dans un mécanisme de manoeuvre d'une porte (100) à mouvement partiellement vertical où le poids (P) de la porte est au moins partiellement compensé, **caractérisé en ce qu'**il comprend au moins une étape consistant à exercer, à l'encontre du moteur, un effort freinant (C₈) variable en fonction de l'intensité et du sens de l'effet conjugué (C₃) du poids (P) de la porte (100) et de l'effort (F₁, C₁) de compensation dudit poids.

11. Procédé selon la revendications 10, **caractérisé en ce que** l'effort freinant (C₈) a une valeur maximale (C₈ₘₐₓ) lorsque l'effet conjugué (C₃) du poids de la porte (100) et de l'effort (F₁, C₁) de compensation dudit poids tend à déplacer ledit organe (4) dans le même sens que ledit moteur (5).

12. Procédé selon l'une des revendications 10 ou 11, **caractérisé en ce que** l'effort freinant (C₈) a une valeur décroissante en fonction de l'effet conjugué (C₃) du poids (P) de la porte (100) et de l'effort (F₁, C₁) de compensation dudit poids lorsque ledit effet conjugué (C₃) tend à déplacer ledit organe en sens inverse audit moteur (5).

13. Procédé selon la revendication 12, **caractérisé en ce que** l'effort freinant (C₈) a une valeur sensiblement inversement proportionnelle à l'effet conjugué (C₃) du poids (P) de la porte (100) et de l'effort (F₁, C₁) de compensation dudit poids lorsque ledit effet conjugué (C₃) tend à déplacer ledit organe en sens inverse audit moteur (5).

## Claims

1. Operating mechanism of a door with a partly vertical movement, said mechanism comprising:
an electric motor (5);
a member (4) capable of being driven by the motor and kinematically linked to the door (100), and
means (126, 127) for at least partial compensation (C1) of the torque (C2) exerted on the said member by the weight (P) of the door,
**characterized in that** it comprises a brake (8) interposed between the said motor (5) and the said member (4) and capable of exerting a braking force (C8) against the said motor at least in the phases of travel of the door (100) in which the combined effect (C3) of the weight (P) of the door and the force (F1, C1) exerted by the compensation means (126, 127) tends to propel the said member (4) in the same direction as the said motor (5).

2. Mechanism according to Claim 1, **characterized in that** the braking force (C8) is maximal (C8max) when the combined effect (C3) of the weight (P) of the door (100) and the force (F1, C1) exerted by the compensation means (126, 127) tends to propel the said member (4) in the same direction as the said motor (5).

3. Mechanism according to either of the preceding claims, **characterized in that** the said braking force (C8) is decreasing as a function of the combined effect (C3) of the weight (P) of the door (100) and the force (F1, C1) exerted by the compensation means (126, 127) when the said combined effect (C3) tends to propel the said member in the opposite direction to the said motor (5).

4. Mechanism according to Claim 3, **characterized in that** the said braking force (C8) is substantially inversely proportional to the combined effect (C3) of the weight (P) of the door (100) and the force (F1, C1) exerted by the compensation means (126, 127) when the said combined effect (C3) tends to propel the said member in the opposite direction to the said motor (5).

5. Mechanism according to any one of the preceding claims, **characterized in that** the maximum value (C8max) of the braking torque exerted by the brake (8) is substantially equal to the nominal torque of the motor (5).

6. Mechanism according to any one of the preceding claims, **characterized in that** the motor (5) is of the direct current type, with voltage-regulated power supply.

7. Mechanism according to any one of the preceding claims, **characterized in that** the brake (8) is of the friction type, with at least one lining (82A, 82B, 83) movable as a function of the magnitude and direction of the combined effect (C3) of the weight (P) of the door (100) and the force (F1, C1) exerted by the compensation means (126, 127).

8. Mechanism according to any one of the preceding claims, **characterized in that** it comprises a sensor (201) for detecting the direction and/or magnitude of the combined effect (C3) of the weight (P) of the door and the force (F1, C1) exerted by the compensation means (126, 127), the said brake being actuated to exert the said braking force (C8) as a function of the output signal (S201) of the said sensor.

9. Use of a brake (8) capable of exerting a variable force (C8) to regulate the torque (C5) to be exerted by an electric motor (5) for driving a member (4) integral with a door (100) with a partly vertical movement, [the said door being] subject to the action of means (126, 127) for at least partial compensation of its weight.

10. Method of regulating the torque to be exerted by an electric motor (5) in an operating mechanism of a door (100) with a partly vertical movement in which the weight (P) of the door is at least partially compensated, **characterized in that** it comprises at least a step consisting in exerting against the motor a braking force (C8) that is variable as a function of the intensity and direction of the combined effect (C3) of the weight (P) of the door (100) and the force (F1, C1) compensating the said weight.

11. Method according to Claim 10, **characterized in that** the braking force (C8) has a maximum value (C8max) when the combined effect C3) of the weight of the door (100) and the force (F1, C1) compensating the said weight tends to propel the said member (4) in the same direction as the said motor (5).

12. Method according to either of Claims 10 and 11, **characterized in that** the braking force (C8) has a value decreasing as a function of the combined effect (C3) of the weight (P) of the door (100) and the force (F1, C1) compensating the said weight when the said combined effect (C3) tends to propel the said member in the opposite direction to the said motor (5).

13. Method according to Claim 12, **characterized in that** the braking force (C8) has a value substantially inversely proportional to the combined effect (C3) of the weight (P) of the door (100) and the force (F1, C1) compensating the said weight when the said combined effect (C3) tends to propel the said member in the opposite direction to the said motor (5).

## Patentansprüche

1. Betätigungsmechanismus eines Tores für eine teilweise vertikale Bewegung, wobei der Mechanismus enthält:
- einen elektrischen Motor (5);
- ein Element (4), das dazu geeignet ist, dass es durch den Motor angetrieben wird, und das kinematisch mit dem Tor (100) verbunden ist, und
- ein Mittel (126, 127) zur Kompensation (C₁) wenigstens teilweise des Moments (C₂), das durch das Gewicht (P) des Tores auf das Element ausgeübt wird,
**dadurch gekennzeichnet, dass** er eine Bremse (8) enthält, die zwischen den Motor (5) und das Element (4) geschaltet ist und die zum Ausüben einer Bremskraft (C₈) gegen den Motor wenigstens in den Bewegungsphasen des Tores (100), bei denen die Gesamtwirkung (C₃) des Gewichts (P) des Tores und der Kraft (F₁, C₁), die durch das Mittel zur Kompensation (126, 127) ausgeübt wird, dazu tendiert, das Element (4) in die gleiche Richtung wie der Motor (5) zu verschieben, geeignet ist.

2. Mechanismus nach Anspruch 1, **dadurch gekennzeichnet, dass** die Bremskraft (C₈) maximal (C₈ₘₐₓ) wird, wenn die Gesamtwirkung (C₃) des Gewichts (P) des Tores (100) und die Kraft (F₁, C₁), die durch das Mittel zur Kompensation (126, 127) ausgeübt wird, dazu tendiert, das Element (4) in die gleiche Richtung wie der Motor (5) zu verschieben.

3. Mechanismus nach einem der vorhergehenden Ansprüche, **dadurch gekennzeichnet, dass** die Bremskraft (C₈) entsprechend der Gesamtwirkung (C₃) des Gewichts (P) des Tores (100) und der Kraft (F₁, C₁), die durch das Mittel zur Kompensation (126, 127) ausgeübt wird, abnimmt, wenn die Gesamtwirkung (C₃) dazu tendiert, das Element in der Richtung entgegen gesetzt zum Motor (5) zu verschieben.

4. Mechanismus nach Anspruch 3, **dadurch gekennzeichnet, dass** die Bremskraft (C₈) etwa umgedreht proportional zu der Gesamtwirkung (C₃) des Gewichts (P) des Tores (100) und der Kraft (F₁, C₁), die durch die Mittel zur Kompensation (126, 127) ausgeübt wird, ist, wenn die Gesamtwirkung (C₃) dazu tendiert, das Element in der Richtung entgegen gesetzt zum Motor (5) zu verschieben.

5. Mechanismus nach einem der vorhergehenden Ansprüche, **dadurch gekennzeichnet, dass** der Maximalwert (C₈ₘₐₓ) des Bremsmoments, das durch die Bremse (8) ausgeübt wird, in etwa gleich dem nominellen Moment des Motors (5) ist.

6. Mechanismus nach einem der vorhergehenden Ansprüche, **dadurch gekennzeichnet, dass** der Motor (5) von einem dauerhaft laufenden Typ mit einer nach der Spannung regulierten Leistung ist.

7. Mechanismus nach einem der vorhergehenden Ansprüche, **dadurch gekennzeichnet, dass** die Bremse (8) von einem Reibungstyp mit wenigstens einem Belag (82A, 82B, 83) ist, der entsprechend dem Wert und der Richtung der Gesamtwirkung (C₃) des Gewichts (P) des Tores (100) und der Kraft (F₁, C₁), die durch die Mittel zur Kompensation (126, 127) ausgeübt wird, beweglich ist.

8. Mechanismus nach einem der vorhergehenden Ansprüche, **dadurch gekennzeichnet, dass** er einen Sensor (201) zur Ermittlung der Richtung und/oder des Wertes der Gesamtwirkung (C₃) des Gewichts (P) des Tores (100) und der Kraft (F₁, C₁), die durch das Mittel zur Kompensation (126, 127) ausgeübt wird, enthält, wobei die Bremse zum Ausüben der Bremskraft (C₈) entsprechend dem Ausgangssignal (S₂₀₁) betätigt wird.

9. Verwendung einer Bremse (8), die geeignet ist, eine veränderliche Kraft (C₈) zum Regulieren des Moments (C₅) auszuüben, das ein elektrischer Motor (5) zum Antreiben eines Elements (4) ausüben muss, das an einem Tor (100) für eine teilweise vertikale Bewegung, das bei der Tätigkeit der Mittel (126, 127) zur Kompensation wenigstens teilweise mit seinem Gewicht belegt wird, befestigt ist.

10. Verfahren zum Regulieren des Moments, das durch einen elektrischen Motor (5) in einem Betätigungsmechanismus eines Tores (100) für eine teilweise vertikale Bewegung, bei der das Gewicht (P) des Tores wenigstens teilweise kompensiert wird, ausgeübt wird, **dadurch gekennzeichnet, dass** es wenigstens einen Schritt enthält, der darin besteht, gegen den Motor, eine veränderliche Bremskraft (C₈) entsprechend der Intensität und der Richtung der Gesamtwirkung (C₃) des Gewichts (P) des Tores (100) und der Kraft (F₁, C₁) zur Kompensation des Gewichts auszuüben.

11. Verfahren nach Anspruch 10, **dadurch gekennzeichnet, dass** die Bremskraft (C₈) einen Maximalwert (C₈ₘₐₓ) aufweist, wenn die Gesamtwirkung (C₃) des Gewichts des Tores (100) und der Kraft (F₁, C₁) zur Kompensation des Gewichts dazu tendiert, das Element (4) in dieselbe Richtung wie der Motor (5) zu verschieben.

12. Verfahren nach einem der Ansprüche 10 oder 11, **dadurch gekennzeichnet, dass** die Bremskraft (C₈) einen abnehmenden Wert entsprechend der Gesamtwirkung (C₃) des Gewichts (P) des Tores (100) und der Kraft (F₁, C₁) zur Kompensation des Gewichts aufweist, wenn die Gesamtwirkung (C₃) dazu tendiert, das Element in eine entgegen gesetzte Richtung zu der des Motors (5) zu verschieben.

13. Verfahren nach Anspruch 12, **dadurch gekennzeichnet, dass** die Bremskraft (C₈) einen Wert etwa umgedreht proportional zu der Gesamtwirkung (C₃) des Gewichts (P) des Tores (100) und der Kraft (F₁, C₁) zur Kompensation des Gewichts aufweist, wenn die Gesamtwirkung (C₃) dazu tendiert, das Element in eine entgegen gesetzte Richtung zu der des Motors (5) zu verschieben.
